# EUROPÄISCHE PATENTSCHRIFT

(11) **EP 1 415 439 B1**
(45) Veröffentlichungstag und Bekanntmachung des Hinweises auf die Patenterteilung: **03.10.2007**
(21) Anmeldenummer: 02754293.5
(22) Anmeldetag: 01.07.2002
(51) Int. Cl.: H04L 12/28, H04L 12/56, H04B 7/26

(54) **VERFAHREN ZUM UBERTRAGEN VON DATEN ZWISCHEN EINER HAUPTSTATION UND EINER NEBENSTATION UND DATENUBERTRAGUNGSSYSTEM**
METHOD FOR TRANSFERRING DATA BETWEEN A MASTER STATION AND A SLAVE STATION, AND CORRESPONDING COMMUNICATION SYSTEM
PROCEDE DE TRANSFERT DE DONNEES ENTRE UNE STATION MAITRESSE ET UNE STATION ESCLAVE, ET SYSTEME DE TRANSFERT DE DONNEES Y RELATIF

(30) Priorität: 10.08.2001 DE 10139342
(43) Veröffentlichungstag der Anmeldung: 06.05.2004
(73) Patentinhaber: Infineon Technologies AG, 81669 München (DE)
(72) Erfinder: BOETZEL, Ulrich, 41564 Kaarst (DE); CONVENT, Thomas, 47661 Issum-Sevelen (DE); HELLFAJER, Roland, 44869 Bochum (DE); WARMERS, Michael, 41812 Erkelenz (DE)
(74) Vertreter: Lange, Thomas
(86) Internationale Anmeldenummer: PCT/DE2002/002377
(87) Internationale Veröffentlichungsnummer: WO 2003/017575

(56) Entgegenhaltungen:
- WO-A-01/41348
- CHAKRABORTY I ET AL: "MAC scheduling policies with reduced power consumption and bounded packet delays for centrally controlled TDD wireless networks" ICC 2001. 2001 IEEE INTERNATIONAL CONFERENCE ON COMMUNICATIONS. CONFERENCE RECORD. HELSINKY, FINLAND, JUNE 11 - 14, 2001, IEEE INTERNATIONAL CONFERENCE ON COMMUNICATIONS, NEW YORK, NY: IEEE, US, Bd. 1 OF 10, 11. Juni 2001 (2001-06-11), Seiten 1980-1984, XP010553667 ISBN: 0-7803-7097-1
- HAARTSEN J: "BLUETOOTH - THE UNIVERSAL RADIO INTERFACE FOR AD HOC, WIRELESS CONNECTIVITY" ON - ERICSSON REVIEW, ERICSSON. STOCKHOLM, SE, Nr. 3, 1998, Seiten 110-117, XP000783249 ISSN: 0014-0171
- WILLIAMS STEVE: "Bluetooth Specification Version 1.1" BLUETOOTH SPECIFICATION , Bd. VERSION, Nr. 1.1, 8. Mai 2001 (2001-05-08), Seiten 111-122, XP000863817

## Beschreibung

Die Erfindung betrifft ein Verfahren zur insbesondere drahtlosen Übertragung von Daten zwischen einer Hauptstation und einer Nebenstation und ein Datenübertragungssystem, welches eine Hauptstation und mindestens eine Nebenstation umfaßt, zwischen denen Daten insbesondere über Funk ausgetauscht werden.

Datenübertragungssysteme, bei denen Daten drahtlos über kurze Entfernungen von nur wenigen Metern zwischen einer Hauptstation und Nebenstationen ausgetauscht werden, werden als Piconetze bezeichnet. Die zur Datenübertragung in Piconetzen zur Verfügung stehenden Frequenzen sind durch die ISM Frequenzbereiche (Industrial, Scientific and Medical) festgelegt. Die ISM Frequenzbereiche sind für die funkorientierte und lizenzlose Anwendung schwacher Sendeleistung reserviert. Bekannt sind auf dem Bluetooth-Standard basierende Piconetze, die eine Hauptstation und eine Anzahl von Nebenstationen aufweisen, wobei die Anzahl der Nebenstationen auf maximal sieben aktive Nebenstationen begrenzt ist.

Eine Datenübertragung von der Hauptstation zu den Nebenstationen wird Downlink genannt. Der umgekehrte Fall der Datenübertragung von den Nebenstationen zu der Hauptstation wird als Uplink bezeichnet. Üblicherweise werden für die Datenübertragung Zeitschlitzverfahren verwendet. Bei Zeitschlitzverfahren werden den Down- und Uplinks Zeitschlitze (slots) mit einer bestimmten zeitlichen Länge zugewiesen. Als Zeitschlitzverfahren kommt häufig das TDMA-Verfahren (Time Division Multiple Access) als Mehrfachzugriffsverfahren sowie das TDD-Verfahren (Time Division Duplex) als Duplex-Verfahren zur Bildung eines bidirektionalen Kanals zwischen der Hauptstation und den Nebenstationen zum Einsatz.

In einer bestehenden Bluetooth-Verbindung ist stets ein festes Zeitintervall vorgegeben, innerhalb welchem mindestens einmal ein Datenburst von der Hauptstation zu einer Nebenstation gesendet wird. Der Nebenstation wird dadurch die Möglichkeit gegeben, als Antwortdatenburst seine Nutzdaten oder zumindest eine Bestätigungsinformation über den Erhalt des Datenbursts an die Hauptstation zu senden. Dieses feste Zeitintervall ist für alle Betriebsmodi der Nebenstation gleich und wird als Pollintervall bezeichnet. Durch das mindestens einmalige Ansprechen einer sich in einem aktiven Zustand befindenden Nebenstation pro Pollinterval wird eine minimale Datenübertragungsrate garantiert.

Die Nebenstationen des Bluetooth-Datenübertragungssystems können sich während einer Bluetooth-Verbindung in verschiedenen Betriebsmodi befinden. Neben einem ununterbrochen aktiven Zustand kann es auch vorkommen, dass sich eine Nebenstation in einem Betriebsmodus mit reduzierter Aktivität befindet. In einem solchen Zustand ist die Nebenstation nicht ständig, sondern nur zeitweise - während eines vorgegebenen Aktivzeitintervalls - aktiv. Dann besteht die Möglichkeit, dass lediglich ein Datenburst von der Hauptstation zur Nebenstation innerhalb des vorgegebenen Aktivzeitintervalls während der reduzierten Aktivitätsperiode gesendet wird. Wird nun beispielsweise der access-code in dem Datenburst oder Antwortdatenburst, entweder von der Hauptstation oder der Nebenstation, nicht erkannt und erfolgt innerhalb eines vorgegebenen Time-out Intervalls auch kein weiterer, fehlerlos durchgeführter Austausch eines Datenbursts und eines Antwortdatenbursts zwischen der Hauptstation und der Nebenstation, so wird die Bluetooth-Verbindung abgebrochen. Bei Bluetooth-Datenübertragungssystemen mit mehreren Nebenstationen kann es daher relativ häufig zu Verbindungsabbrüchen zwischen der Hauptstation und den Nebenstationen kommen.

In der Schrift "MAC Scheduling Policies with Reduced Power Consumption and Bounded Packet Delays for Centrally Controlled TDD Wireless Networks", I. Chakraborty et al., 2001, IEEE International Conference on Communications. Conference Record. Helsinki, Finland, 11. - 14. Juni 2001, ist ein Verfahren zum Übertragen von Daten von einem Master zu einem Slave beschrieben, bei welchem die Zeitdauer, während der der Slave im Sniff-Modus in den Kanal horcht, entsprechend dem Datenaufkommen verändert wird.

In der Veröffentlichung "Bluetooth - The universal radio interface for ad hoc, wireless connectivity", J. Haartsen, Ericsson Review, Stockholm, SE, Nr. 3, 1998, Seiten 110 - 117, wird beschrieben, wie in einem Bluetooth-System eine Verbindung zwischen zwei Systemeinheiten, welche sich in einem Standby-Modus befinden, aufgebaut wird.

Aufgabe der Erfindung ist es, ein insbesondere auf dem Bluetooth-Standard basierendes Datenübertragungssystem zu schaffen, bei dem eine höhere Verbindungsstabilität zwischen der Hauptstation und zumindest einer Nebenstation erreicht wird.

Diese Aufgabenstellung wird erfindungsgemäß durch ein Verfahren, das die Schritte nach Patentanspruch 1 aufweist und ein Datenübertragungssystem, welches die Merkmale nach Patentanspruch 5 aufweist, gelöst.

Ein erfindungsgemäßes Datenübertragungsystem, insbesondere ein Bluetooth-Datenübertragungssystem, umfaßt eine Hauptstation und mindestens eine Nebenstation. Zwischen der Hauptstation und der Nebenstation werden Datenbursts entsprechend einem Zeitschlitzverfahren ausgetauscht. Die Nebenstation wird dabei von der Hauptstation zur Übertragung von Nutzdaten oder einer anderen, das Bestehen der Verbindung quittierenden Information unter Einhaltung einer minimalen Burstrate angesprochen. Die Nebenstation kann dabei in einer bestehenden Bluetooth-Verbindung verschiedene Betriebsmodi einnehmen.

Erfindungsgemäß wird in einer bestehenden Verbindung ein Betriebsmodus der Nebenstation mit reduzierter Aktivität erkannt und daraufhin die Anzahl der von der Hauptstation zur Nebenstation gesendeten Datenbursts in einem Aktivzeitintervall der Nebenstation gegenüber der minimalen Burstrate erhöht.

Der Vorteil des erfindungsgemäßen Datenübertragungsverfahrens liegt darin, dass eine höhere Verbindungsstabilität und somit eine Reduzierung der Wahrscheinlichkeit eines Verbindungsabbruchs zwischen der Hauptstation und der Nebenstation in einer Verbindung erreicht werden kann, da das Ansprechen der Nebenstation nunmehr entsprechend dem erkannten Betriebsmodus und in Abhängigkeit von dessen Charakteristik (z.B. Aktiv- bzw. Deaktiv-Zeitintervalle) vorgenommen werden kann. Ferner wird erreicht, dass auch ein ein- oder mehrmaliges NichtErkennen des access-codes in den Datenbursts, die von der Hauptstation zur Nebenstation oder in den Antwortdatenbursts, die von der Nebenstation zur Hauptstation gesendet werden können, nicht unweigerlich den Abbruch der Verbindung zwischen der Hauptstation und der Nebenstation zur Folge hat.

Des weiteren kann vorgesehen sein, dass die Nebenstation im Betriebsmodus einer reduzierten Aktivität, insbesondere im Sniff-Modus beim Bluetooth-Datenübertragunssystem, innerhalb eines Aktivzeitintervalls während einer Periode der reduzierten Aktivität mehrfach aufeinanderfolgend, abhängig von den im Aktivzeitintervall freien Zeitschlitzen, durch die Hauptstation angesprochen wird. Dadurch kann eine erhöhte Verbindungsstabilität zwischen der Hauptstation und der sich im Betriebsmodus des Sniff-Modus befindlichen Nebenstation erreicht werden. Des weiteren kann dadurch eine Synchronisation zwischen der Hauptstation und der Nebenstation erreicht werden.

Das erfindungsgemäße Datenübertragungssystem läßt sich beispielsweise in digitalen schnurlosen Kommunikationssystemen mit geringer Reichweite, wie z.B. schnurlosen Telefonen mit mehreren Mobilteilen, einsetzen. Eine weitere Anwendung betrifft den Datenaustausch zwischen einem Computer und Peripheriegeräten, wie z.B. einer Maus, einem Drucker oder einem Scanner.

Vorteilhafte Ausgestaltungen der Erfindung sind in den Unteransprüchen angegeben.

Die Erfindung wird nachfolgend unter Bezugnahme auf die Zeichnungen näher erläutert. Es zeigen:
- Fig. 1: einen Aufbau eines aus einer Hauptstation und einer Nebenstation bestehenden Datenübertragungssystems gemäß dem Stand der Technik;
- Fig. 2: eine schematische Darstellung der Zeitintervalle in einem Sniff-Modus einer Nebenstation;
- Fig. 3: eine schematische Darstellung des Austausches von Datenbursts und Antwortdatenbursts zwischen einer Hauptstation und einer Nebenstation in verschiedenen Betriebsmodi der Nebenstation, und
- Fig. 4a, 4b: eine schematische Darstellung des Austausches von Datenbursts und Antwortdatenbursts zwischen einer Hauptstation und einer Nebenstation in verschiedenen Betriebsmodi der Nebenstation gemäß einem Ausführungsbeispiel der Erfindung.

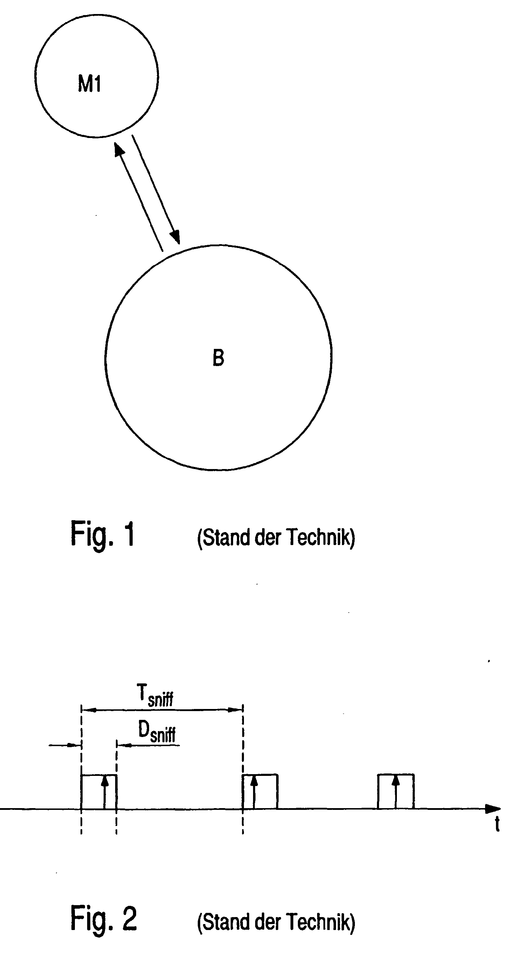

Ein bekanntes Datenübertragungssystem (Figur 1) weist eine Hauptstation B und beispielsweise eine Nebenstation M1 auf. Die Hauptstation B kann über Funk Datenbursts an die Nebenstation M1 übertragen. Ebenso kann die Nebenstation M1 Antwortdatenbursts über Funk an die Hauptstation B übermitteln. Als Datenburst und Antwortdatenbursts wird im folgenden eine ohne Unterbrechung übertragene Folge von Daten bezeichnet. Bei dem in Figur 1 dargestellten Datenübertragungssystem, welches als Piconetz bezeichnet wird, weisen die Hauptstation B und die Nebenstation M1 jeweils Sende- und Empfangseinheiten auf.

Die Nebenstation M1 kann sich während der Zeitdauer einer Bluetooth-Verbindung in verschiedenen Betriebsmodi befinden. Beispielsweise kann die Mobilstation M1 im Aktiv-Modus oder aber auch im Sniff-Modus sein.

Unter dem Aktiv-Modus wird dabei der Betriebszustand verstanden, bei dem die Nebenstation M1, die nachfolgend als Slave bezeichnet wird, ständig, d.h. ohne zeitliche Unterbrechungen an der Kommunikation im Piconetz teilnimmt. Der Slave wird dabei von der Hauptstation B, die nachfolgend als Master bezeichnet wird, periodisch angesprochen. Durch das periodische Ansprechen des Slaves durch den Master wird eine Synchronisation des Slaves zum Kommunikationskanal erreicht. Unter dem Sniff-Modus wird der Betriebszustand des Slaves verstanden, bei dem der Slave nicht fortwährend an der Kommunikation im Piconetz teilnimmt. Der Sniff-Modus ist somit ein Betriebszustand, bei dem der Slave eine reduzierte Aktivität aufweist. Wenn sich der Slave im Sniff-Modus befindet, ist er innerhalb einer festen Zeitdauer T_{sniff} (Figur 2) immer nur für ein gewisses Zeitintervall D_{sniff} < T_{sniff} aktiv. Lediglich in diesem Zeitintervall D_{sniff} kann der Slave vom Master angesprochen werden und wird vom Master wie ein aktiver Slave behandelt. Der Pfeil symbolisiert dabei ein einmaliges Ansprechen des Slaves durch den Master.

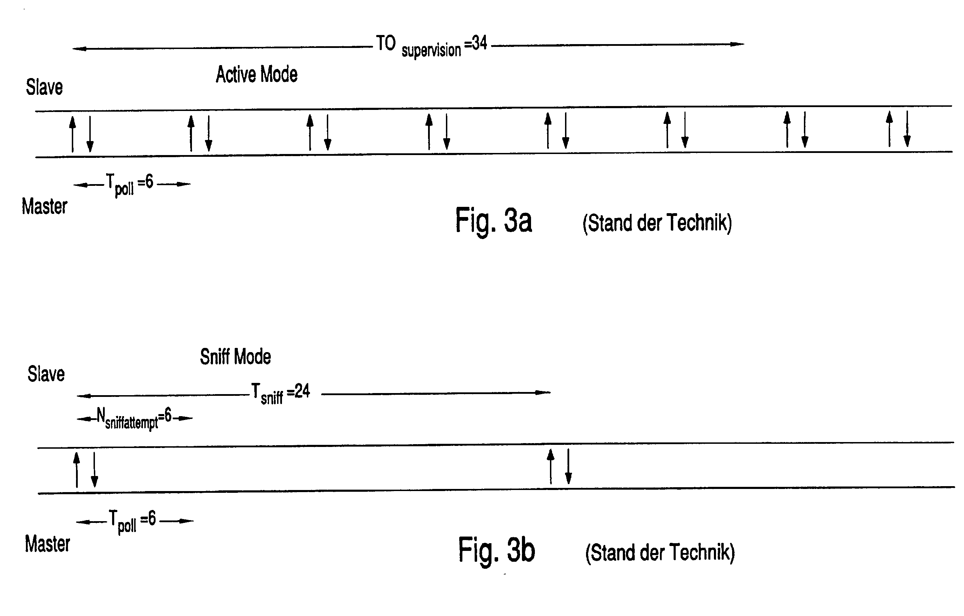

In den Figuren 3a und 3b ist die Kommunikation zwischen dem Master und dem Slave während verschiedener Betriebsmodi des Slaves dargestellt. In Figur 3a ist dabei die Kommunikation zwischen dem Master und dem sich im Aktiv-Modus befindlichen Slave dargestellt. Der Master spricht den Slave innerhalb des Pollintervalls Tₚₒₗₗ an. Unter dem Ansprechen ist dabei das Senden eines Datenbursts vom Master zum Slave innerhalb eines dafür vorgesehenen Zeitschlitzes zu verstehen und durch einen Pfeil in Richtung des Slaves dargestellt. Das Pollintervall Tₚₒₗₗ gibt für eine bestehende Bluetooth-Verbindung diejenige Zeit vor, innerhalb der ein Slave im Aktiv-Modus mindestens einmal angesprochen werden muss. Der Master kann den Slave innerhalb des Pollintervall Tₚₒₗₗ mehrmals ansprechen, jedoch wird nur ein einmaliges Ansprechen garantiert. Durch das Ansprechen wird dem Slave die Möglichkeit gegeben als Antwortdatenburst seine Nutzdaten zu senden. Sofern keine Nutzdaten vorhanden sind, sendet der Slave ein den Erhalt des vom Master stammenden Datenbursts bestätigenden Antwortdatenburst aus. Hat der Slave den Datenburst vom Master korrekt empfangen, antwortet er also in jedem Fall mit einem Antwortdatenburst. Dies ist mit einem Pfeil in Richtung zum Master dargestellt. Die Zeitschlitze zum Übertragen des Datenbursts vom Master zum Slave, sowie des Antwortdatenbursts vom Slave zum Master weisen jeweils eine Dauer von 625 µs auf. Ein Bluetooth-Frame wird dabei durch zwei aufeinanderfolgende Bluetooth-Zeitschlitze gebildet und weist somit eine Zeitdauer von 1,25 ms auf. Das Pollintervalls Tₚₒₗₗ kann beispielsweise mit sechs Zeitschlitzen angegeben sein, das heißt 3 Frames umfassen. Üblicherweise wird der Slave, wie in der Figur 3a dargestellt, im Aktiv-Modus regelmäßig mit der Wiederholungszeitdauer T_{Poll} vom Master angesprochen.

Befindet sich der Slave im Betriebsmodus Sniff-Modus (Figur 3b), kann der Master den Slave nur während der aktiven Zeitphase D_{sniff} (Figur 2) des Slaves ansprechen. Die aktive Phase des Sniff-Modus weist dabei im Ausführungsbeispiel sechs Zeitschlitze N_{sniffattempt}=6 auf und hat daher in dem hier gewählten Beispiel die gleiche Dauer wie das Pollintervall T_{Poll}.

In dem in den Figuren 3a und 3b dargestellten Stand der Technik einer Bluetooth-Datenübertragung wird der Betriebsmodus, in dem der Slave betrieben wird, nicht erkannt und es wird daher im Sniff-Modus des Slaves lediglich ein einziges Ansprechen des Slaves durch den Master in dem Zeitintervall Tₚₒₗₗ durchgeführt. Somit erfolgt auch nur ein einziges Ansprechen des sich im Sniff-Modus befindlichen Slaves durch den Master in der aktiven Phase D_{sniff} der gesamten Sniff-Zeitdauer T_{sniff}. Die Sniff-Zeitdauer T_{sniff} beträgt im Beispiel 24 Zeitschlitze (Figur 3b).

Dadurch, dass der Slave im Sniff-Modus nur einmal pro Sniff-Zeitdauer T_{sniff} erreichbar ist, ist der Slave innerhalb einer Zeitdauer TOₛᵤₚₑᵣᵥᵢₛᵢₒₙ, die als Supervision-Time-Out eines Link Supervision Timers bezeichnet wird, im Beispiel lediglich zweimal durch den Master erreichbar. Der Link Supervision Timer ist dabei eine Kontrollinstanz bei der Bluetooth-Verbindung, welche das Bestehen von Verbindungen im Piconetz überwacht. Dieser verbindungsbezogene Timer wird stets neu gestartet, wenn ein Datenburst vom Slave und ein daraufhin vom Slave gesendeter Antwortdatenburst vom Master korrekt empfangen wird. Erfolgt kein Empfang eines Antwortdatenbursts für eine bestimmte Verbindung innerhalb der Supervision-Time-Out TOₛᵤₚₑᵣᵥᵢₛᵢₒₙ, wird angenommen, dass die Bluetooth-Verbindung zwischen dem Master und dem Slave abgebrochen ist.

Durch die Bluetooth-Spezifikation ist vorgeschrieben, dass die Sniff-Zeitdauer T_{sniff} kleiner als die Supervision-Time-Out TOₛᵤₚₑᵣᵥᵢₛᵢₒₙ sein muss. Im Beispiel ist die Supervision-Time-Out TO_{Supervision} mit einer Zeitdauer von 34 Zeitschlitzen ausgeführt.

Der Master spricht den Slave im Sniff-Modus hier also nur einmal während der aktiven Phase D_{sniff} der Sniff-Periode und somit nur einmal pro Sniff-Zeitdauer T_{sniff} an. Damit wird der Slave innerhalb der Supervision-Time-Out TO_{Supervision} des Link Supervision Timers nur zweimal angesprochen. Somit wird der Supervision Timer bereits dann ausgelöst, wenn der Master oder der Slave bei zwei aufeinanderfolgenden Antwortdatenbursts bzw. Datenbursts den access-code nicht erkennt. Die Verbindung zwischen dem Master und dem Slave würde somit bereits bei einem zweimaligen Nichterkennen des access-codes der Datenbursts oder der Antwortdatenbursts abgebrochen.

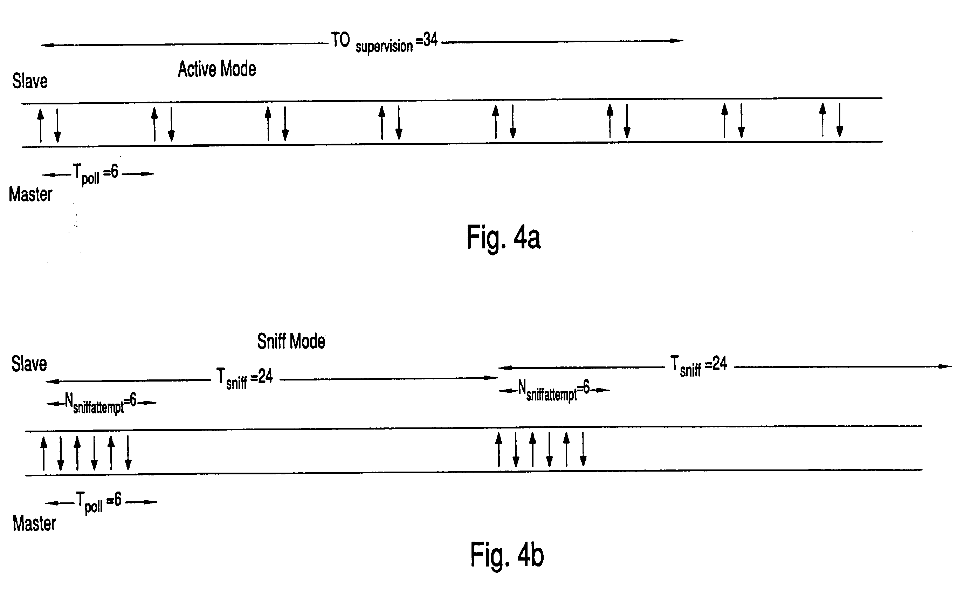

Als Ausführungsbeispiel der Erfindung ist in Fig. 4a die Kommunikation zwischen dem Master und einem im Aktiv-Modus befindlichen Slave und in Fig. 4b die Kommunikation zwischen dem Master und dem im Sniff-Modus befindlichen Slave dargestellt. Befindet sich der Slave im Betriebsmodus Aktiv-Modus, so wird dieser Betriebsmodus erkannt und die Kommunikation zwischen dem Master und dem Slave erfolgt gemäß der schematischen Darstellung. Diese entspricht im Ausführungsbeispiel der in Fig. 3a dargestellten Kommunikation zwischen dem im Aktiv-Modus befindlichen Slave und dem Master.

Befindet sich der Slave im Betriebsmodus Sniff-Modus oder wechselt der Slave vom Aktiv-Modus in den Sniff-Modus (Fig. 4b), so wird dies vom Datenübertragungssystem erkannt. Dabei wird das einmalige Ansprechen des Slaves im Aktiv-Modus auf ein dreimaliges Ansprechen des Slaves im Sniff-Modus durch den Master erhöht. Somit erhöht sich die garantierte Anzahl der Datenbursts, die vom Master an den Slave innerhalb der Zeitdauer Tₚₒₗₗ gesendet werden, wenn der Betriebsmodus des Slaves geändert wird. Die zusätzlichen Datenbursts, die vom Master an den Slave im Sniff-Modus gesendet werden, werden in den ungeradzahlig positionierten, freien Zeitschlitzen innerhalb des Aktivzeitintervalls D_{sniff} der Sniff-Zeitdauer T_{sniff} gesendet.

Im Ausführungsbeispiel werden diese zusätzlichen Datenbursts vom Master an den Slave im dritten und fünften Zeitschlitz gesendet. Werden diese Datenbursts vom Slave korrekt empfangen, so sendet der Slave Antwortdatenbursts in den freien Zeitschlitzen 4 und 6 an den Master.

Es kann auch vorgesehen sein, dass nicht alle freien Zeitschlitze innerhalb der Zeitdauer Tₚₒₗₗ zum Übertragen von Datenbursts vom Master an den Slave sowie zum Übertragen von Antwortdatenbursts vom Slave an den Master genutzt werden.

So kann beispielsweise vorgesehen sein, dass die Datenbursts vom Master an den Slave in den freien Zeitschlitzen 1 und 5 innerhalb der Zeitdauer Tₚₒₗₗ und die Antwortdatenbursts vom Slave an den Master innerhalb der freien Zeitschlitze 2 und 6 innerhalb der Zeitdauer Tₚₒₗₗ an den Master gesendet werden. Maximal kann die Anzahl der Datenbursts, die vom Master an den Slave gesendet werden, halb so groß sein wie die Gesamtanzahl an freien Zeitschlitzen innerhalb der Zeitdauer Tₚₒₗₗ, die zur Datenübertragung zur Verfügung stehen. Indem innerhalb der Zeitdauer Tₚₒₗₗ des Aktivzeitintervalls D_{sniff} die Anzahl der Datenbursts, die vom Master an den Slave gesendet werden, d.h. die Anzahl des Ansprechens des Masters an den Slave, erhöht wird, erhöht sich auch die Wahrscheinlichkeit, dass zumindest ein Antwortdatenburst vom Master korrekt empfangen wird. Somit nimmt die Wahrscheinlichkeit, dass der Link Supervision-Timer innerhalb der Überwachungszeitdauer TO_{Supervision} neu gestartet wird, zu, was zur Folge hat, dass die Verbindung zwischen dem Master und dem Slave aufrechterhalten wird.

Befindet sich der Slave im Activ-Modus kann auch vorgesehen sein, dass freie Zeitschlitze innerhalb der Zeitdauer Tₚₒₗₗ zum Übertragen von Datenbursts und Antwortdatenbursts genützt werden. Dadurch kann im Activmode des Slaves eine verbesserte Datenübertragung erreicht werden.

## Patentansprüche

1. Verfahren zum Übertragen von Daten zwischen einer Hauptstation (B) und mindestens einer Nebenstation (M1) in einem Datenübertragungssystem unter Verwendung eines Zeitschlitzverfahrens, bei welchem die Nebenstation (M1) von der Hauptstation zur Übertragung von Daten oder einer anderen das Bestehen der Verbindung quittierenden Information an die Hauptstation (B) wiederholt angesprochen wird, indem die Hauptstation (B) unter Einhaltung einer minimalen Burstrate Datenbursts an die Nebenstation (M1) sendet, mit den Schritten:
- Erkennen eines Betriebsmodus mit reduzierter Aktivität der Nebenstation (M1) in der bestehenden Verbindung, und
- Ansprechen der Nebenstation (M1) im Zustand reduzierter Aktivität derart, dass die Anzahl der von der Hauptstation (B) zur Nebenstation (M1) gesendeten Datenbursts in einem Aktivzeitintervall (D_{Sniff}) der Nebenstation (M1) gegenüber der minimalen Burstrate erhöht wird.

2. Verfahren nach Anspruch 1,
**dadurch gekennzeichnet,**
**dass** das Übertragen der Daten gemäß dem Bluetooth-Standard durchgeführt wird.

3. Verfahren nach Anspruch 2
**dadurch gekennzeichnet,**
**dass** in dem Aktivzeitintervall (D_{sniff}) ein mehrfaches aufeinanderfolgendes Ansprechen der Nebenstation (M1) durch die Hauptstation (B) abhängig von den im Aktivzeitintervall (D_{sniff}) freien Zeitschlitzen durchgeführt wird und die freien Zeitschlitze zum Ansprechen variabel gewählt werden.

4. Verfahren nach einem der vorhergehenden Ansprüche,
**dadurch gekennzeichnet,**
**dass** das Verfahren
- in digitalen schnurlosen Kommunikationssystemen, oder
- in computergesteuerten Unterhaltungssystemen, insbesondere in computergesteuerten Spielesystemen eingesetzt wird.

5. Datenübertragungssystem, insbesondere ein Bluetooth-Datenübertragungssystem, welches eine Hauptstation (B) und mindestens eine Nebenstation (M1) aufweist, zwischen denen Daten ausgetauscht werden, und bei welchem die Hauptstation (B) die Nebenstation (M1), welche verschiedene Betriebsmodi aufweist, in fortwährender Wiederholung zum Übertragen von Daten oder einer anderer das Bestehen einer Verbindung quittierenden Information unter Einhaltung einer minimalen Burstrate durch Senden von Datenbursts an die Nebenstation (M1) anspricht, wobei im Zustand reduzierter Aktivität der Nebenstation (M1) die Anzahl der von der Hauptstation (B) zur Nebenstation (M1) gesendeten Datenbursts in einem Aktivzeitintervall (D_{Sniff}) der Nebenstation (M1) gegenüber der minimalen Burstrate erhöht wird.

6. Datenübertragungssystem nach Anspruch 5,
**dadurch gekennzeichnet,**
**dass** das zeitliche Ansprechschema so ausgelegt ist, dass bei einem Betriebsmodus der Nebenstation (M1) mit reduzierter Aktivität, insbesondere einem Sniff-Modus, die Anzahl der von der Hauptstation (B) zur Nebenstation (M1) gesendeten Datenbursts in einem Aktivzeitintervall der Nebenstation (M1) erhöht wird.

7. Datenübertragungssystem nach Anspruch 6,
**dadurch gekennzeichnet,**
**dass** das zeitliche Ansprechschema so ausgelegt ist, dass in dem Aktivzeitintervall (D_{sniff}) des Modus mit reduzierter Aktivität der Nebenstation (M1) ein mehrfaches aufeinanderfolgendes Ansprechen der Nebenstation (M1) durch die Hauptstation (B), abhängig von den im Aktivzeitintervall (D_{sniff}) freien Zeitschlitzen, durchgeführt wird und die freien Zeitschlitze zum Ansprechen variabel wählbar sind.

8. Datenübertragungssystem nach einem der Ansprüche 5 bis 7,
**dadurch gekennzeichnet,**
**dass** das Datenübertragungssystem
- in digitalen schnurlosen Kommunikationssystemen oder
- in computergesteuerten Unterhaltungssystemen, insbesondere in computergesteuerten Spielesystemen, einsetzbar ist.

## Claims

1. Method for transmission of data between a master station (B) and at least one slave station (M1) in a data transmission system using a time slot method, in which the slave station (M1) is addressed repeatedly by the master station in order to transmit data or other information acknowledging the existence of the connection to the master station (B), by the master station (B) sending data bursts to the slave station (M1), while maintaining a minimum burst rate, with the steps:
- identification of an operating mode with reduced activity of the slave station (M1) in the existing connection, and
- response by the slave station (M1) in the state of reduced activity such that the number of data bursts sent by the master station (B) to the slave station (M1) in an active time interval (D_{sniff}) for the slave station (M1) is increased above the minimum burst rate.

2. Method according to Claim 1,
**characterized**
**in that** the data is transmitted in accordance with the Bluetooth standard.

3. Method according to Claim 2,
**characterized**
**in that** the slave station (M1) is addressed a number of times successively by the master station (B) in the active time interval (D_{sniff}) as a function of the time slots which are free in the active time interval (D_{sniff}) and the time slots for response are chosen variably.

4. Method according to one of the preceding claims,
**characterized**
**in that** the method is used
- in digital cordless communications systems or
- in computer-controlled entertainment systems, in particular computer-controlled games systems.

5. Data transmission system, in particular a Bluetooth data transmission system, which has a master station (B) and at least one slave station (M1) between which data is interchanged, and in which the master station (B) addresses the slave station (M1), which has various operating modes, continuously repeatedly to transmit data or other information acknowledging the existence of a connection, by sending data bursts to the slave station (M1), while maintaining a minimum burst rate, in which case, in the state of reduced activity of the slave station (M1), the number of data bursts sent by the master station (B) to the slave station (M1) in an active time interval (D_{sniff}) for the slave station (M1) is increased above the minimum burst rate.

6. Data transmission system according to Claim 5,
**characterized**
**in that** the time addressing scheme is designed such that, when the slave station (M1) is in an operating mode with reduced activity, in particular a sniff mode, the number of data bursts which are sent from the master station (B) to the slave station (M1) in an active time interval of the slave station (M1) is increased.

7. Data transmission system according to Claim 6,
**characterized**
**in that** the time addressing scheme is designed such that, when the slave station (M1) is in the active time interval (D_{sniff}) of the mode with reduced activity, the slave station (M1) is addressed repeatedly and successively by the master station (B) depending on the free time slots in the active time interval (D_{sniff}), and the free time slots for response can be selected in a variable manner.

8. Data transmission system according to one of Claims 5 to 7,
**characterized**
**in that** the data transmission system can be used
- in digital cordless communications systems or
- in computer-controlled entertainment systems, in particular in computer-controlled games systems.

## Revendications

1. Procédé pour la transmission de données entre une station principale (B) et au moins une station auxiliaire (M1) dans un système de transmission de données en utilisant un procédé à créneaux temporels, dans lequel la station principale s'adresse de façon répétée à la station auxiliaire (M1) pour la transmission de données ou d'une autre information confirmant l'existence de la liaison à la station principale (B), la station principale (B) envoyant des salves de données à la station auxiliaire (M1) en respectant un débit de salves minimal, avec les étapes de :
- détection d'un mode de fonctionnement avec activité réduite de la station auxiliaire (M1) dans la liaison existante, et
- adressage de la station auxiliaire (M1) dans l'état à activité réduite de telle sorte que le nombre des salves de données envoyées par la station principale (B) à la station auxiliaire (M1) dans un intervalle de temps d'activité (D_{sniff}) de la station auxiliaire (M1) est augmenté par rapport au débit de salves minimal.

2. Procédé selon la revendication 1,
**caractérisé par le fait que** la transmission des données est effectuée selon le standard Bluetooth.

3. Procédé selon la revendication 2,
**caractérisé par le fait que**, dans l'intervalle de temps d'activité (D_{sniff}), des adressages multiples successifs de la station auxiliaire (M1) sont effectués par la station principale (B) en fonction des créneaux temporels libres dans l'intervalle de temps d'activité (D_{sniff}) et que les créneaux temporels libres pour l'adressage sont choisis de manière variable.

4. Procédé selon l'une des revendications précédentes,
**caractérisé par le fait que** le procédé est utilisé
- dans des systèmes de communication sans fil numériques, ou
- dans des systèmes de divertissement assistés par ordinateur, notamment dans des systèmes de jeu assistés par ordinateur.

5. Système de transmission de données, notamment système de transmission de données Bluetooth, qui comporte une station principale (B) et au moins une station auxiliaire (M1) entre lesquelles des données sont échangées et dans lequel la station principale (B) s'adresse de façon continuellement répétée à la station auxiliaire (M1), qui présente différents modes de fonctionnement, pour la transmission de données ou d'une autre information confirmant l'existence de la liaison en respectant un débit de salves minimal, et ce en envoyant des salves de données à la station auxiliaire (M1), le nombre des salves de données envoyées par la station principale (B) à la station auxiliaire (M1) lorsque la station auxiliaire (M1) est dans un état à activité réduite étant augmenté dans un intervalle de temps d'activité (D_{sniff}) de la station auxiliaire (M1) par rapport au débit de salves minimal.

6. Système de transmission de données selon la revendication 5,
**caractérisé par le fait que** le schéma d'adressage temporel est conçu de telle sorte que, pour un mode de fonctionnement de la station auxiliaire (M1) avec activité réduite, notamment pour un mode d'écoute, le nombre des salves de données envoyées par la station principale (B) à la station auxiliaire (M1) est augmenté dans un intervalle de temps d'activité de la station auxiliaire (M1).

7. Système de transmission selon la revendication 6,
**caractérisé par le fait que** le schéma d'adressage temporel est conçu de telle sorte que, dans l'intervalle de temps d'activité (D_{sniff}) du mode avec activité réduite de la station auxiliaire (M1), des adressages multiples successifs de la station auxiliaire (M1) sont effectués par la station principale (B) en fonction des créneaux temporels libres dans l'intervalle de temps d'activité (D_{sniff}) et les créneaux temporels libres pour l'adressage peuvent être choisis de manière variable.

8. Système de transmission de données selon l'une des revendications 5 à 7,
**caractérisé par le fait que** le système de transmission de données est utilisable
- dans des systèmes de communication sans fil numériques, ou
- dans des systèmes de divertissement assistés par ordinateur, notamment dans des systèmes de jeu assistés par ordinateur.
